# EUROPEAN PATENT APPLICATION

(11) **EP 3 340 149 A1**
(43) Date of publication of application: **27.06.2018**
(21) Application number: 16206454.7
(22) Date of filing: 22.12.2016
(51) Int. Cl.: G06Q 20/40

(54) **METHODS AND SYSTEMS FOR VALIDATING AN INTERACTION**

(71) Applicant: Mastercard International Incorporated, Purchase NY 10577 (US)
(72) Inventor: PAREKH, Hemel, Peterborough, PE7 8EZ (GB); FOX, Nathalie, Northampton, NN1 5LT (GB); HARTE, Seán Paul, County Kildare (IE)
(74) Representative: Lawrence, Richard Anthony

(57) **Abstract**

Methods and systems for validating an interaction between a user and a service provider system are disclosed. Electronically-stored credential data for the user are retrieved (100), and a communication link (252, 223, 207) is established (102) between a user device and a service provider system. Via the communication link the retrieved user credential data is transferred (104) from the user device to the provider system, and the transferred user credential data is used (106) to validate that the user can access a service provided by the service provider system. The validation of the interaction, following receipt of the user credential data, may include processing the interaction.

## Description

### FIELD OF THE DISCLOSURE

This disclosure is directed to methods and systems for validating an interaction between a user and a service provider system.

### BACKGROUND OF THE DISCLOSURE

Methods of validating or authorising interactions between users and providers, such as customer-merchant transactions, or user interactions with public institutions where authority may be required, are known.

Often in such interactions, some proof of the user's identity is required. In some interactions, it may be that this is provided by some sort of credential or document provided to the user by a trusted third party, which once offered to the provider lends some assurance to that provider that the user can be safely or properly authorised for the interaction.

In previously considered systems and methods, such credentials have been provided in document form, which can delay processing of the interaction or transaction, and may prevent the interaction in the first place, if the documents are not available at the proper time or event. This kind of transaction can also lack security, as the sensitive documents have to be transported to and from the interaction point by the user.

One example is the provision of transaction cards to users in place of cash. These interactions are commonly subject to identity or credential controls, such as "know your customer" (KYC) procedures. In previous methods, these have been provided using such documentary credentials, which slows the interaction considerably as compared to any normal cash-based transaction, or can render the interaction impractical.

Previously considered methods for authorising such interactions are also typically inflexible and difficult to repeat precisely, and some types of interactions may be unavailable using such methods.

Alternative methods for authorising transactions, such as providing biometric information, are known; however, these do not provide authorisation, for instance from a trusted third party source, to enable greater security for the provider.

The present disclosure aims to address these problems and provide improvements upon the known devices and methods.

### STATEMENT OF DISCLOSURE

Aspects and embodiments of the disclosure are set out in the accompanying claims.

In general terms, one embodiment of a first aspect of the disclosure can provide a method of validating an interaction between a user and a service provider system, comprising: retrieving electronically stored credential data for the user; establishing a communication link between a user device and a service provider system; transferring via the communication link the retrieved user credential data from the user device to the service provider system; and using the transferred user credential data to validate that the user can access a service provided by the service provider system.

This electronic storage and transfer of user credentials can allow far quicker, more reliable, and more secure user-provider interactions. It can also allow more flexibility in the transactions, as the credentials are potentially always available to the user, and can allow more different types of interaction, as the credentials are available to be transferred electronically, where such interactions would not be possible with hard copy documents.

Embodiments can establish identity features relating to a user, and verify the user, and/or validate or authorise the interaction on the basis of these. The communication link over which the credential information can be transferred or transmitted can be a local communication link, such as a local wireless or bluetooth communication protocol, or a near-field communication (NFC) protocol. The communication can use communication interfaces of the user device and the provider system. The communication can also be over a wired connection.

The credential information or data provided can be information derived from a third party, usually one which is a trusted source able to corroborate information about the user. For example, the information might be from a copy of the user's passport. The provision of the credential information can aid the interaction provider in managing risks of the interaction or transaction. For example, the credentials can allow anti-fraud and anti-bribery/corruption procedures, and help to prevent money laundering and ID theft.

Preferably, the step of using the transferred user credential data comprises: following receipt of the user credential data, processing an interaction at a service provider processor. Additionally, the method may comprise, before receipt of the user credential data, preventing processing of the interaction. Thus the interaction cannot proceed without the credential data.

Suitably, the step of using the transferred user credential data comprises comparing the user credential data with provider credential data. Preferably, the provider credential data comprises data corresponding to a list of users for which the service cannot be provided. The credential data can be compared with those on the list, to prevent an interaction or a service being provided when a credential (owner) on the list is matched with a received credential (owner).

In an embodiment, the method comprises filtering the retrieved user credential data before using the credential data to validate user access to the service. Hence the credential data or information provided may be reduced, or edited, or obscured in parts to keep certain details personal. For example, if the data or information is simply an image of an identity document of the user, such as a driving licence, certain parts of the image can be blacked out. If the information is a set of data, some data can be removed before transmission or use in the validation or authorisation.

Suitably, the step of retrieving comprises retrieving the user credential data from a store on the user device.

Alternatively, the step of retrieving comprises: connecting a communication interface of the user device to a communications network; contacting via the communications network a credential provider; and retrieving, from storage managed by the credential provider, the user credential data.

Thus the credentials may be stored on the device itself, or elsewhere to be retrieved by the user device. If elsewhere, these can be accessed via the connection with that external storage; for example a telecommunications company providing the user device or contracted to provide services for it, may have credential data or information for the user already stored. Therefore it may be simple to access that information for the user in this sort of reach-back procedure, to employ in validating or authorising an interaction or access to a service.

In an embodiment, the step of using comprises: following receipt of the user credential information, transferring validation data from the provider system to the user device via the communication link. This may form a second stage of the validation or authorisation procedure, in which a further query is made of the user, for example to acknowledge the information returned, or provide additional credential information. The validation data may comprise authorisation data.

One embodiment of a second aspect of the disclosure can provide a system for validating an interaction between a user and a service provider system, comprising: a user device; a service provider system, having a provider communication interface and at least one processor; and an electronic store retrievably storing credential information for the user, wherein the provider communication interface is operable to transfer user credential data, retrieved from the electronic store, from the user device to the service provider system, and wherein the processor of the service provider system is configured to use the transferred user credential data to validate that the user can access a service provided by the service provider system.

The user device and provider system may both have communication interfaces which may cooperate for the transfer, or the provider system's communication interface may provide the transfer/reading capability, for example where the user device comprises an NFC chip.

One embodiment of a third aspect of the disclosure can provide a user device for validating an interaction between a user and a service provider system according to the method of any of the above described embodiments, the device comprising: a device communication interface; and an electronic store retrievably storing credential data for the user, wherein the device communication interface is operable to allow transferral of user credential data, retrieved from the electronic store, from the user device to the service provider system.

One embodiment of a fourth aspect of the disclosure can provide a service provider system for validating an interaction between a user and a service provider system, comprising: a service provider communication interface, operable to communicate with a communication interface of a user device; and at least one processor, wherein the service provider communication interface is operable to transfer user credential data, retrieved from an electronic store by the user device, from the user device to the service provider system, and wherein the processor of the provider system is configured to use the transferred user credential data to validate that the user can access a service provided by the service provider system.

Suitably, the user device is embedded in a user item. For example, the user device may be (incorporated on) a chip, which chip may be mounted in the user item. For example, the item may be a passport with a built-in near field communication chip (NFC). The user item may be a wearable, such as a garment or smart watch.

Alternatively, the user device is incorporated in, or comprises, a portable user device. The components of the user device such as the communication interface and the store, can thus be the communication interface and store of the portable user device.

One embodiment of a fifth aspect of the disclosure can provide a method of providing data or information for an interaction between a user and a provider, comprising: obtaining electronically-stored data or information for the user; establishing a communication link between a user device and an interaction provider system; and transferring via the communication link the obtained user data or information from the user device to the provider system.

One embodiment of a sixth aspect of the disclosure can provide a method of validating an interaction between a user and an service provider system, comprising: retrieving electronically-stored credential data for the user; establishing a communication link between a user device and a service provider system; transferring via the communication link the retrieved user credential data from the user device to the provider system, to validate that the user can access a service provided by the service provider system.

One embodiment of a seventh aspect of the disclosure can provide a method of validating an interaction between a user and a service provider system, comprising: establishing a communication link between a user device and an service provider system; transferring via the communication link, from the user device to the service provider system, credential data for the user, the credential data retrieved from an electronic store by the user device; and using the transferred user credential to validate that the user can access a service provided by the service provider system.

Further aspects of the disclosure comprise computer program applications, or computer readable media comprising computer program code, adapted, when loaded into or run on a computer or processor, to cause the computer or processor to carry out a method according to any of the aspects and embodiments described above.

The above aspects and embodiments may be combined to provide further aspects and embodiments of the disclosure.

Processors and/or controllers may comprise one or more computational processors, and/or control elements having one or more electronic processors. Uses of the term "processor" or "controller" herein should therefore be considered to refer either to a single processor, controller or control element, or to pluralities of the same; which pluralities may operate in concert to provide the functions described. Furthermore, individual and/or separate functions of the processor(s) or controller(s) may be hosted by or undertaken in different control units, processors or controllers.

To configure a processor or controller, a suitable set of instructions may be provided which, when executed, cause said control unit or computational device to implement the techniques specified herein. The set of instructions may suitably be embedded in said one or more electronic processors. Alternatively, the set of instructions may be provided as software to be executed on said computational device.

### BRIEF DESCRIPTION OF THE DRAWINGS

The disclosure will now be described by way of example with reference to the accompanying drawings, in which:
Figure 1 is a diagram illustrating steps of a method according to an embodiment of the disclosure;
Figures 2a and 2b are diagrams illustrating the components, structure and functionality of a user device and a provider system respectively, according to an embodiment of the disclosure; and
Figure 3 is a diagram illustrating features of methods of embodiments of the disclosure.

### DETAILED DESCRIPTION OF EMBODIMENTS

Embodiments of the disclosure facilitate validation or authorisation of user-provider interactions, particularly where such validation or authorisation would otherwise be time-consuming or cumbersome, lacking in security, and/or inapplicable to certain types of interaction.

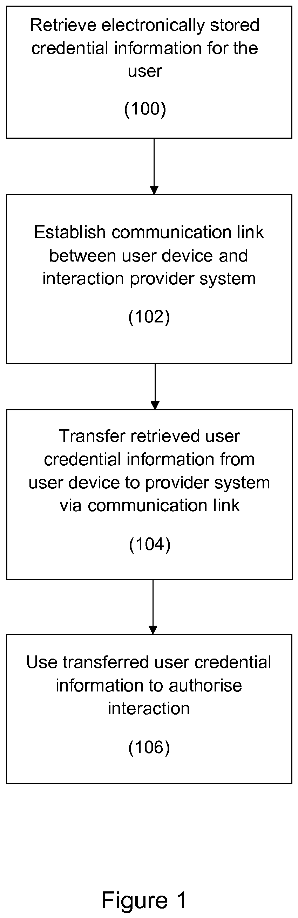

Figure 1 is a diagram illustrating steps of a method according to an embodiment of the disclosure. First, electronically stored credential data or information for the user is retrieved (100). The data or information may be stored locally, for example on a user device, or on a networked storage facility accessible by the user device. The credential information for the user will be some sort of document or set of data which attests to some establishable fact about the user, for example a name and address, a qualification, or an authority (issued by a third party to the user) for a given action. The document or data may be (from) a passport, transaction or bank account details, a sample or copy of a utility bill, a driving licence, a degree or certification, a security clearance (level), or the like.

Retrieval of the credentials will typically involve loading or downloading the data or information from the store, which may be any known kind of digital storage. The user device in embodiments of the disclosure will have a local storage means on which the credentials may be stored. If they are stored elsewhere, and accessed by the device, the device will nevertheless provide storage capability, for storing the information if only temporarily before transfer.

Second, a communication link is established between the user device and the interaction or service provider system. This may be achieved by any known local communication protocol, such as wireless or bluetooth, or by NFC. In the latter case, the communication will in the usual manner be carried out by the communication device of the provider system reading the NFC chip of the user device. The communication may also be by wired connection. The communication will usually be local, as the user will be in the vicinity of the provider system which requires the credentials in order to carry out the transaction.

Such interactions or transactions may include, for example, obtaining a transaction card, such as a pre-paid foreign currency card. On applying for such a card, KYC procedures are usually required - embodiments of the disclosure can electronically transfer stored KYC compliant information on the user device to the provider, to allow authorisation of the interaction (which would be withheld, should no KYC information be available). Another example of such interactions may be executing a contract for a telecommunications device; the telecommunications service provider may require user credentials. For car hire, or for purchasing travel insurance at an airport, the user can provide credentials to allow the transaction. Any token for cash replacement can potentially be obtained using authorisation by credentials in this way.

Once the communication link has been established, the user credential information can be transferred (104) from the user device to the provider system, via the communication link. The credential information or data will be loaded from storage, transmitted by the user device (or read by the provider system) and received by the communication interface of the provider system. The credential information can then be used for validation or authorisation of the interaction (106).

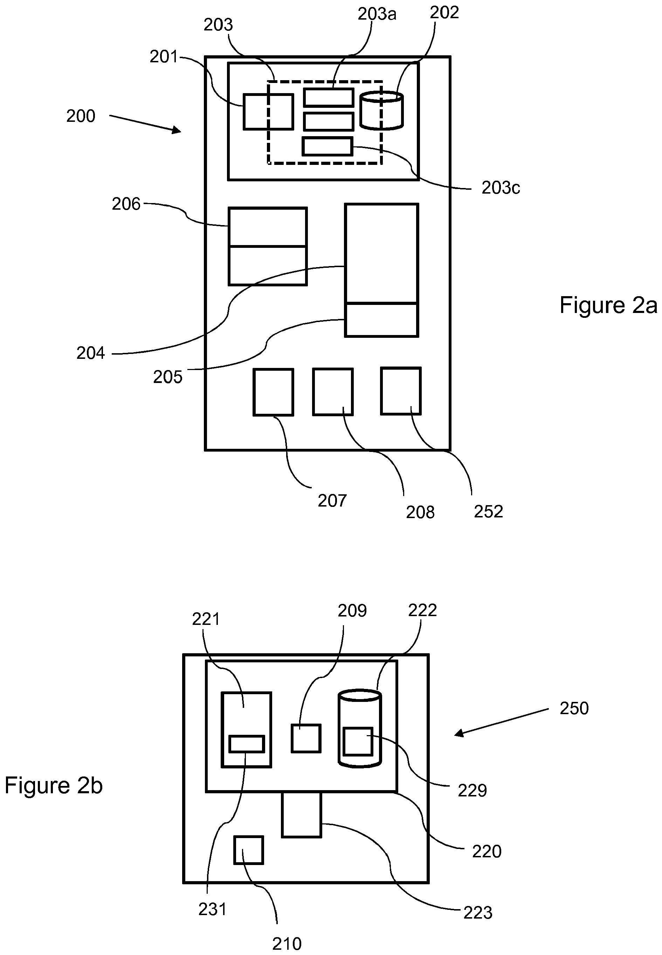

Figure 2a is a diagram illustrating the components, structure and functionality of a user device according to an embodiment of the invention, employed as the means of transferring the credentials to the provider system. The user device 200 may be a mobile handset, though it should be noted that any other portable computing apparatus such as a smart watch, laptop, notebook or tablet computer can be used as computing apparatus in embodiments of the disclosure.

The device comprises a processor 201 and a memory 202, such that the memory stores and the processor will subsequently run applications (shown generally as residing in an application space 203) such as a data filtering application 203a. The device has a user interface comprising a display 204 and a touchscreen 205 (or other input device) and associated drivers to allow a user to enter data into and view information from the applications 203. The device also has a communications capability, such as a SIM 206 and wireless communication element 207 together providing the ability to connect to a cellular communications network; in addition or alternatively the device may include wi-fi or wired network access. For communication with the provider system, either this wi-fi or wired access is used, or the device will comprise an NFC chip (252) or the like for near-field communication. The memory 202 can be used for storing the credential data, or alternatively a dedicated storage means can be used.

It should be noted that in alternative embodiments, these features may be embodied in minimal components, i.e. storage and means for communication with the provider system, such as a readable (NFC) chip alone. Such a chip may be housed in a user item, such as a passport, or a wearable garment, or in a transaction card. In one embodiment, a passport containing an NFC chip, as previously considered, can be used as the user device - the chip stores the passport information, the passport information is commonly sufficient for KYC procedures, and the chip can be read by a suitably equipped NFC provider system.

Figures 2b is a diagram illustrating the components, structure and functionality of a provider system (250) according to an embodiment of the disclosure, which processes credentials for authorising the interaction.

The provider system comprises a processing environment 220 with processor 221 and memory 222, with associated communications functionality 223. The communications functionality may include networking capability allowing communication with a transaction network infrastructure. Alternatively or in addition, a telecommunications capability allows communication over a local communications protocol with the user device (200). This communication may be secured, and/or the information may be encrypted before transmission or reading. The communications capability is also in embodiments capable of transmitting information or data back to the user device, in response to receipt of data, and for instance processing of that data regarding authorisation.

The processor 221 is a representation of processing capability and may in practice be provided by several processors. A database 210 is provided, storing for example credential data against which the transferred user credentials may be compared. The authorisation module 209 is shown as an element within the processing environment 220, with associated authorisation data or programming instructions 229 stored in the memory 222. Elements shown within the processing environment 220 use the processor 221 and the memory 222 to deliver functionality; for example, these elements can provide steps of embodiments of the disclosure such as using the credentials to authorise the interaction.

The computing devices noted above in Figures 2a and 2b may include one or more of logic arrays, memories, analogue circuits, digital circuits, software, firmware and processors. The hardware and firmware components of the computing devices may include various specialized units, circuits, software and interfaces for providing the functionality and features described herein. The processor(s) may be or include one or more microprocessors, application specific integrated circuits (ASICs), programmable logic devices (PLDs) and programmable logic arrays (PLAs).

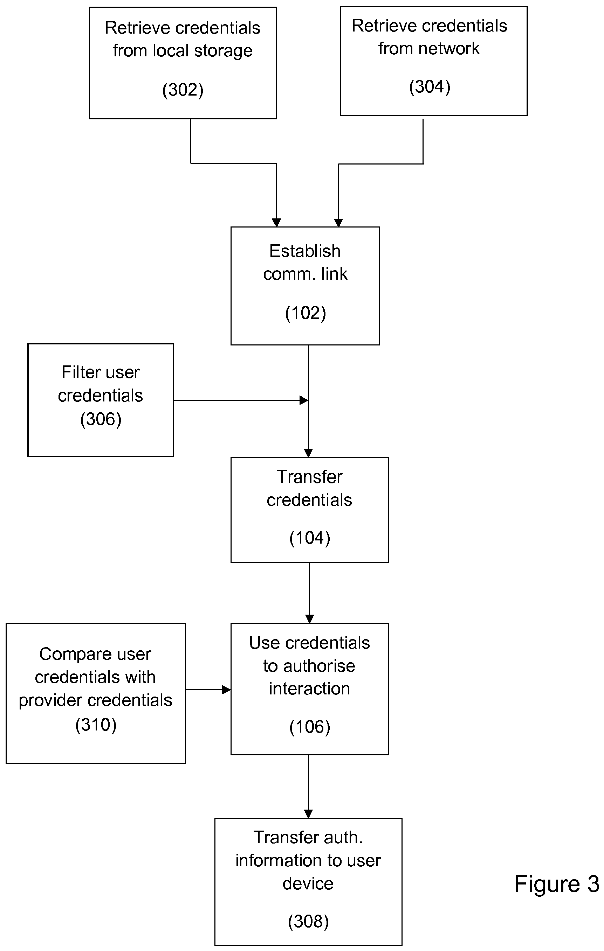

Figure 3 is a diagram illustrating features of methods of embodiments of the disclosure; certain features of Figure 1 re-appear in condensed form.

As in Figure 1, credentials are retrieved; the credentials are either retrieved from the local storage (302) or are retrieved from a network (304) with which the user device can communicate. For example a telecommunications company providing the user device or contracted to provide services for it, may have credential information for the user already stored; this can be retrieved for authorisation of an interaction. As before, a communication link is established (102); in this embodiment, the user credential information may be filtered (306) before being transferred, or indeed before being stored before transmission. The filtration may also take place on the provider system, though this may be less agreeable to users. The filtering step can remove sensitive parts of a credential document or source. For example, this may be achieved by use of a template for certain documents, where the items to be obscured will always be in the same place, for example on a passport.

As before, after the credentials are transferred (104), they are used for authorisation (106). Part of this authorisation step may be to compare (310) the credentials received with provider credential information. For example, the provider may have records of, or access to, credit rating information; the user credentials provided can be used to search this credit rating information to determine whether the user is a credit risk. The credit rating information, or other credential data needed, alternatively may be accessible by the provider system over a network, by communication with the relevant authority.

The provider credentials may also contain information on individuals who will not be permitted to complete an interaction; for example a list of banned users. The transferred user credentials can be compared with such a list.

Once the interaction is authorised, a further step of communicating back (308) to the user device can be undertaken. For example, on satisfactory completion of an authorisation step, such as obtaining passport details for the user, the provider may transfer data back to the user device to complete the transaction. For example, the provider may transmit a terms and conditions document to the user, for their approval by the appropriate means of interaction with their device.

The provider system may be embodied in a terminal, such as a modified POS terminal, for counter interactions. The system may be housed in a kiosk with which the user interacts. Interactions such as those described herein are also possible at a dedicated machine, or even a user's own home machine, if that machine incorporates or is in communication with a suitable system for communicating with the user's device, such as an NFC chip reader.

Features of embodiments of the disclosure may be embodied in use of a computer program application or app on the user device. Here the customer can enter, and if they desire store their credential information, or download it from the relevant source. This may be their passport or equivalent (e.g. national ID card) details required for KYC. The mobile device can then interact via for example the mobile device's NFC chip with an NFC enabled terminal (or via bluetooth) at the retail location. In this way and as described above the device can not only upload the required KYC details to the database but also push to the customer the terms, conditions and charges associated with the interaction required (for example, obtaining a pre-paid FX card) to the customer via the NFC or bluetooth channel, allowing them to accept the terms and charges via the app.

In another embodiment, use of the above app can perform the "reach back" function to obtain through the customer's mobile network operator (MNO) billing data or other credential data, thereby providing a degree of verified KYC data and increasing the degree of trust within the data.

It will be appreciated by those skilled in the art that the disclosure has been described by way of example only, and that a variety of alternative approaches may be adopted without departing from the scope of the disclosure, as defined by the appended claims.

## Claims

1. A method of validating an interaction between a user and a service provider system, comprising:
retrieving electronically-stored credential data (100) for the user;
establishing (102) a communication link (252, 223, 207) between a user device and a service provider system;
transferring (104) via the communication link the retrieved user credential data from the user device to the service provider system; and
using (106) the transferred user credential data to validate that the user can access a service provided by the service provider system.

2. A method according to Claim 1, wherein the step of using the transferred user credential data comprises: following receipt of the user credential data, processing an interaction at a service provider processor.

3. A method according to Claim 1 or Claim 2, wherein the step of using the transferred user credential data comprises comparing (310) the user credential data with service provider credential data.

4. A method according to Claim 3, wherein the service provider credential data comprises data corresponding to a list of users for which the service cannot be provided.

5. A method according to any preceding claim, comprising filtering (306) the retrieved user credential data before using the credential data to validate user access to the service.

6. A method according to any preceding claim, wherein the step of retrieving comprises retrieving (302) the user credential data from a store on the user device.

7. A method according to any of the Claims 1 to 5, wherein the step of retrieving comprises:
connecting a communication interface of the user device to a communications network;
contacting via the communications network a credential provider; and
retrieving (304), from storage managed by the credential provider, the user credential information.

8. A method according to any preceding claim, wherein the step of using comprises: following receipt of the user credential data, transferring validation data (308) from the service provider system to the user device via the communication link.

9. A system (200, 250) for validating an interaction between a user and a service provider system, comprising:
a user device (100);
a service provider system (250), having a provider communication interface (207, 223, 252) and at least one processor (201); and
an electronic store (202, 210) retrievably storing credential data for the user,
wherein the provider communication interface is operable to transfer (104) user credential data, retrieved from the electronic store, from the user device to the service provider system,
and wherein the processor of the service provider system is configured to use (106) the transferred user credential data to validate that the user can access a service provided by the service provider system.

10. A user device (200) for validating an interaction between a user and a service provider system according to the method of any of the Claims 1 to 8, the device comprising:
a device communication interface (207, 252); and
an electronic store (202) retrievably storing credential data for the user,
wherein the device communication interface is operable to allow transferral (104) of user credential data, retrieved from the electronic store, from the user device to the service provider system.

11. A service provider system (252) for validating an interaction between a user and a service provider system, comprising:
a service provider communication interface (223), operable to communicate with a communication interface of a user device (207, 252); and
at least one processor (201),
wherein the provider communication interface is operable to transfer (104) user credential data, retrieved from an electronic store by the user device, from the user device to the service provider system,
and wherein the processor of the service provider system is configured to use (106) the transferred user credential data to validate that the user can access a service provided by the service provider system.

12. A system according to any of the Claims 9 to 11, wherein the user device (252) is embedded in a user item.

13. A system according to any of the Claims 9 to 11, wherein the user device (200) is incorporated in a portable user device.

14. A computer program application, or a computer readable medium comprising computer program code, adapted, when loaded into or run on a computer or processor, to cause the computer or processor to carry out a method according to any of the Claims 1 to 8.
